(19) Europäisches Patentamt
European Patent Office
Office européen des brevets

(11) Numéro de publication : **0 194 952 B2**

# (12) NOUVEAU FASCICULE DE BREVET EUROPEEN

(45) Date de publication du nouveau fascicule du brevet : **15.01.92 Bulletin 92/03**

(51) Int. Cl.⁵ : **C01B 15/12**

(21) Numéro de dépôt : **86420050.6**

(22) Date de dépôt : **20.02.86**

(54) Procédé de fabrication en continu de perborate de sodium monohydrate à partir de perborate de sodium tétrahydraté.

(30) Priorité : **26.02.85 FR 8503008**

(43) Date de publication de la demande :
**17.09.86 Bulletin 86/38**

(45) Mention de la délivrance du brevet :
**06.04.88 Bulletin 88/14**

(45) Mention de la décision concernant
l'opposition :
**15.01.92 Bulletin 92/03**

(84) Etats contractants désignés :
**AT BE CH DE FR GB IT LI LU NL SE**

(56) Documents cités :
**DE-C- 2 650 225**
**FR-A- 1 081 421**
**FR-A- 2 013 104**
**FR-A- 2 207 859**
**FR-A- 2 285 339**

(73) Titulaire : **ATOCHEM**
**4 & 8, Cours Michelet La Défense 10**
**F-92800 Puteaux (FR)**

(72) Inventeur : **Dugua, Jacques**
**241 Chemin des Flachères**
**F-69390 Charly (FR)**

EP 0 194 952 B2

Jouve, 18, rue Saint-Denis, 75001 PARIS

**Description**

La présente invention concerne un procédé de fabrication en continu de perborate de sodium monohydraté à partir de perborate de sodium tétrahydraté.

Elle concerne plus particulièrement la déshydratation en continu du perborate de sodium tétrahydraté en perborate de sodium monohydraté en lit fluidisé au moyen d'un courant d'air chaud.

Le perborate de sodium de formule brute $NaBO_7H_8$, dénommé perborate de sodium tétrahydraté, est couramment utilisé pour obtenir des compositions lessivielles. Il présente cependant des caractéristiques, comme par exemple la vitesse de dissolution ou la stabilité à la température, qui sont encore insuffisantes pour qu'il donne pleinement satisfaction dans ce domaine d'utilisation.

Aussi lui préfère-t-on de plus en plus le perborate de sodium dit monohydraté de formule brute $NaBO_4H_2$ qui possède, en particulier, par rapport au perborate de sodium tétrahydraté, une teneur en oxygène actif supérieure de 50% environ et une vitesse de dissolution plus rapide.

Les procédés connus de fabrication du perborate de sodium monohydraté à partir du perborate de sodium tétrahydraté consistent à éliminer de celui-ci la quantité désirée d'eau de cristallisation au moyen d'un courant d'air chaud.

Afin d'assurer une bonne répartition de l'air chaud comme une bonne uniformité de la température dans la masse à déshydrater, et d'éviter une décomposition exagérée de cette dernière, il a été proposé d'effectuer la déshydratation du perborate de sodium tétrahydraté en lit fluidisé au moyen du courant d'air chaud.

C'est ce que fait le brevet français délivré sous le numéro 1081421 selon lequel la technique du lit fluidisé permet de maintenir dans la masse à déshydrater une température homogène comprise entre 50°C et 60°C.

Cependant, obtenir en continu, selon cette technique du lit fluidisé, des grains de perborate monohydraté résistant à l'usure par abrasion exige, selon le brevet français publié sous le numéro 2013104, d'opérer au moyen d'un courant d'air dont la température est supérieure à 180°C à l'entrée dans la zone de fluidisation, ou bien, si tel n'est pas le cas, de répondre simultanément à la double exigence du brevet français et du certificat d'addition français respectivement publiés sous les numéros 2207859 et 2285339 : humidité relative de l'air circulant dans la zone de fluidisation égale à 40% au moins et 80% au plus, température de l'air quittant ladite zone égale à 60°C au moins.

Effectuer la déshydratation en continu en lit fluidisé selon le procédé décrit dans le premier brevet cité ci-dessus conduit à un monohydrate dont la qualité est malheureusement dégradée par la présence reconnue d'une quantité rapidement importante de croûtes de dimension excédant celle admise par les utilisateurs.

Les procédés décrits dans les deux autres documents non seulement impliquent en pratique au moins deux étapes de déshydratation mais encore conduisent à la formation de très fines particules qualifiées de poussière qui, séparées du courant d'air humide, dit air de déshydratation, qui les entraine hors de la zone de fluidisation, demandent à être remises à l'état de perborate de sodium tétrahydraté avant de pouvoir entrer à nouveau dans le processus de déshydratation.

Le procédé de l'invention permet d'éviter les inconvénients des procédés connus et d'obtenir en continu, en une seule étape, des grains de perborate de sodium monohydraté de résistance à l'usure par abrasion élevée, dans des conditions dont tout laissait prévoir quelles n'autoriseraient pas un tel résultat.

Il consiste en un procédé de fabrication en continu de perborate de sodium monohydraté par déshydratation de perborate de sodium tétrahydraté en une seule étape en lit fluidisé au moyen d'un courant d'air chaud, caractérisé en ce que la température de l'air est comprise entre 100°C et 180°C lorsqu'il entre dans la zone de fluidisation et, dans ladite zone, la température comprise entre la température de fusion du perborate de sodium tétrahydraté et 80°C, et l'humidité relative inférieure à 40% et au moins égale à 10%.

Lorsque l'air, à son entrée dans la zone de fluidisation, a une température inférieure à 100°C, il est encore possible d'opérer dans le cadre des autres caractéristiques de l'invention, mais la productivité devient rapidement trop faible pour que soient satisfaites les exigences industrielles en ce domaine.

Lorsque cette même température atteint ou excède 180°C, la formation de croûtes se développe de plus en plus, entrainant immédiatement les inconvénients signalés.

La gamme préférée est 130°C-175°C.

Il est possible d'opérer comme il est dit dans l'invention mais avec une température dans la zone de fluidisation en dehors de la gamme définie plus haut.

Toutefois, dans le cas d'une température supérieure à 80°C, le supplément de dépense d'énergie calorifique qui doit être concédé ne se traduit pratiquement par aucune amélioration sensible du résultat du procédé conduit selon les caractéristiques de l'invention.

Dans le cas d'une température inférieure à la température de fusion du perborate de sodium tétrahydraté la résistance à l'usure par abrasion du perborate de sodium monohydraté obtenu devient vite insuffisante.

L'humidité relative de l'air dans la zone de fluidisation est de préférence comprise entre 15% et 30%.

Le temps de séjour dans la zone de fluidisation n'est pas critique. Il peut de ce fait prendre des valeurs très différentes, par exemple être compris entre 10 et 60 minutes, les autres paramètres, comme la hauteur du lit, la répartition du flux gazeux, étant choisis pour que les critères de fluidisation soient normalement respectés.

Le procédé de l'invention peut être conduit dans tout appareillage communément employé en fluidisation gaz-solide qui soit construit en un matériau résistant bien à la corrosion par l'air humide et à l'abrasion due au mouvement des solides, comme par exemple le verre ou, le plus couramment, l'acier inoxydable.

L'appareillage est essentiellement constitué d'un réacteur de fluidisation cylindrique possédant un système de répartition la plus homogène possible dans la masse en fluidisation de l'air introduit à sa base, une évacuation de l'air de déshydratation située en haut du réacteur au-dessus de la masse fluidisée, une introduction du perborate à déshydrater située elle aussi dans la partie supérieure du réacteur, une évacuation du perborate de sodium monohydraté par débordement extérieur de la masse fluidisé, enfin d'un système qui permet d'isoler efficacement les grains entrainés hors de la zone de fluidisation par l'air de déshydratation et qui est généralement constitué d'un ou plusieurs cyclones.

Les grains ainsi isolés qui, d'ordinaire, doivent être remis à l'état de tétrahydrate avant de pouvoir être recyclés sous cette forme et être déshydratés à nouveau, sont, dans le procédé de l'invention, directement utilisables comme constituant du perborate de sodium monohydraté fabriqué, lorsque leur quantité n'excède pas environ 10% en poids du poids du perborate de sodium monohydraté formé.

Cet avantage supplémentaire est généralement acquis pratiquement dans le traitement du perborate de sodium tétrahydraté industriel lorsque la vitesse linéaire ascensionnelle du flux gazeux traversant la zone de fluidisation, mesurée dans les conditions régnant à la sortie de cette zone, n'excède pas environ 0,5 m/s

Les exemples suivants, donnés à titre indicatif mais non limitatif, illustrent le procédé de l'invention.

Les valeurs indiquées pour la vitesse linéaire ascensionnelle du flux gazeux traversant la zone de fluidisation sont mesurées dans les conditions régnant à la sortie de ladite zone.

Dans chacun des exemples, le rendement pondéral a été de 99% au moins, compte tenu du perborate entrainé par l'air de déshydratation, isolé par cyclonage de cet air et chaque fois directement utilisé comme constituant du produit fabriqué.

Les valeurs indiquées sous le terme de taux d'usure par abrasion ont été déterminées comme suit: 50 g de perborate sont soumis durant 6 minutes à l'action de 8 billes d'acier inoxydable de 20 mm de diamètre contenues dans un cylindre horizontal en acier inoxydable de 100 mm de diamètre intérieur et de 115 mm de longueur tournant à une vitesse de 150 tours/minute ; le taux d'usure par abrasion est alors évalué comme étant le pourcentage pondéral de perborate de granulométrie inférieure à 53 μm.

Les mesures de surface spécifique du produit fabriqué sont effectuées selon la méthode BET.

La densité apparente du perborate de sodium monohydraté fabriqué à toujours été supérieure à 0,5 g/ml.

## EXEMPLE 1

Dans un réacteur de fluidisation essentiellement constitué par un tube cylindrique en acier inoxydable de 90 mm de diamètre, sont introduits 0,3 kg/h de perborate de sodium tétrahydraté contenant 8% d'humidité.

L'état fluidisé est assuré au moyen d'un courant d'air dont la température est de 120°C lorsqu'il entre dans la zone de fluidisation et la vitesse linéaire ascensionnelle de 0,3 m/s.

Dans la zone de fluidisation, la température est de 65°C et l'humidité relative de 13%.

Le perborate de sodium monohydraté obtenu contient 15,3% en poids d'oxygène actif, présente une surface spécifique de 6,9 $m^2/g$, une vitesse de dissolution de 100% inférieure à la minute et un taux d'usure par abrasion de 5,8%.

## EXEMPLE 2

En opérant dans le même appareillage que dans l'exemple 1 mais en modifiant les conditions opératoires comme suit :

— débit de perborate de sodium tétrahydraté à 8% d'humidité : 0,5 kg/h
— température de l'air entrant dans la zone de fluidisation : 150°C
— vitesse ascensionnelle du flux gazeux : 0,25 m/s
— température dans la zone de fluidisation : 70°C
— humidité relative dans la zone de fluidisation : 16%,

le perborate de sodium monohydraté obtenu contient 15,4% en poids d'oxygène actif, présente une surface spécifique de 5,4 $m^2/g$, une vitesse de dissolution de 100% inférieure à la minute et un taux d'usure par abrasion égal à 4,3%.

## EXEMPLE 3

En opérant dans le même appareillage que dans l'exemple 1 mais en modifiant les conditions opératoires comme suit :

— débit de perborate de sodium tétrahydraté à 8% d'humidité : 0,61 kg/h

— température de l'air entrant dans la zone de fluidisation : 175°C

— vitesse ascensionnelle du flux gazeux : 0,25 m/s

— température dans la zone de fluidisation : 75°C

— humidité relative dans la zone de fluidisation : 17%,

le perborate de sodium monohydraté obtenu contient 15,6% en poids d'oxygène actif, présente une surface spécifique de 3,3 m²/g, une vitesse de dissolution de 100% inférieure à la minute et un taux d'usure par abrasion égal à 4%.

## EXEMPLE 4

Dans un réacteur de fluidisation essentiellement constitué d'un tube cylindrique en acier inoxydable de 300 mm de diamètre sont introduits 6,3 kg/h de perborate de sodium tétrahydraté contenant 8% d'humidité.

L'état fluidisé est assuré au moyen d'un courant d'air dont la température est de 175°C lorsqu'il entre dans la zone de fluidisation et la vitesse linéaire ascensionnelle de 0,25 m/s.

Dans la zone de fluidisation la température est de 70°C et l'humidité relative de 22%.

Le perborate de sodium monohydraté obtenu contient 15,25% en poids d'oxygène actif, présente une surface spécifique de 6,3 m²/g, une vitesse de dissolution de 100% inférieure à la minute et un taux d'usure à l'abrasion de 4,5%.

## EXEMPLE 5

En opérant dans le même appareillage que dans l'exemple 4 mais en modifiant les conditions opératoires comme suit :

— débit de perborate de sodium tétrahydraté à 8% d'humidité : 6,7 kg/h

— température de l'air entrant dans la zone de fluidisation : 175°C

— vitesse ascensionnelle du flux gazeux : 0,25 m/s

— température dans la zone de fluidisation 65°C

— humidité relative dans la zone de fluidisation 29%,

le perborate de sodium monohydraté obtenu contient 15,3% en poids d'oxygène actif, présente une surface spécifique de 6,8 m²/g, une vitesse de dissolution de 100% inférieure à la minute et un taux d'usure par abrasion de 5%.

## EXEMPLE 6

En opérant dans le même appareillage que dans l'exemple 4 mais en modifiant les conditions opératoires comme suit :

— débit de perborate de sodium tétrahydraté à 8% d'humidité : 8 kg/h

— température de l'air entrant dans la zone de fluidisation : 175°C

— vitesse ascensionnelle du flux gazeux : 0,4 m/s

— température dans la zone de fluidisation : 70°C

— humidité relative dans la zone de fluidisation : 22%

le perborate de sodium monohydraté obtenu contient 15,3% en poids d'oxygène actif, présente une surface spécifique de 6,8 m²/g, une vitesse de dissolution de 100% inférieure à la minute et un taux d'usure par abrasion de 6,5%.

## Revendications

1. Procédé de fabrication en continu de perborate de sodium monohydraté par déshydratation de perborate de sodium tétrahydraté en une seule étape en lit fluidisé au moyen d'un courant d'air chaud, caractérisé en ce que la température de l'air est comprise entre 100°C et 180°C lorsqu'il entre dans la zone de fluidisation et, dans ladite zone, la température comprise entre 65°C et 80°C, et l'humidité relative inférieure à 40% et au moins égale à 10%.

2. Procédé selon la revendication 1 caractérisé en ce que la température de l'air est comprise entre 130°C et 175°C.

3. Procédé selon l'une des revendications 1 ou 2, caractérisé en ce que l'humidité relative est comprise entre 15% et 30%.

4. Procédé selon l'une des revendications 1 à 3 caractérisé en ce que les grains entraînés par l'air hors de la zone de fluidisation, lorsque leur quantité est au plus égale à 10% en poids du poids de perborate de sodium monohydraté formé, sont utilisés directement comme constituant du produit fabriqué sans autre opération que leur isolement préalable.

5. Procédé selon le revendication 4 caractérisé en ce que la vitesse linéaire de l'air, mesurée dans les conditions régnant à la sortie de la zone de fluidisation n'excède pas 0,5 m/s.

6. Procédé selon l'une des revendications 4 et 5 caractérisé en ce que l'isolement des grains entraînés est réalisé par cyclonage de l'air les renfermant.

## Patentansprüche

1. Verfahren zur kontinuierlichen Herstellung von Natriumperboratmonohydrat durch Dehydratisierung von Natriumperborattetrahydrat in einer Stufe im Fließbett mit einem warmen Luftstrom, dadurch gekennzeichnet, daß die Temperatur der Warmluft beim Eintritt in die Wirbelschichtzone zwischen 100°C und 180°C beträgt, daß in dieser Zone die Temperatur zwischen 65°C und 80°C gehalten wird und daß in der Zone die relative Luftfeuchtigkeit weniger als 40% jedoch mindestens 10% beträgt.

2. Verfahren nach Anspruch 1, dadurch gekennzeichnet, daß die Temperatur der Warmluft zwischen 130°C und 175°C beträgt.

3. Verfahren nach Anspruch 1 oder 2, dadurch gekennzeichnet, daß die relative Luftfeuchtigkeit zwischen 15 und 30% beträgt.

4. Verfahren nach einem der Ansprüche 1 bis 3, dadurch gekennzeichnet, daß die aus der Wirbelschichtzone ausgetragenen Körner, wenn ihr Anteil höchstens 10 Gewichtsprozent bezogen auf das Gewicht an gebildetem Natriumperboratmonohydrat beträgt, direkt als Bestandteil eines industriellen Produkts verwendet werden, ohne daß sie über die bloße Isolierung hinaus einem weiteren Arbeitsgang unterworfen werden.

5. Verfahren nach Anspruch 4, dadurch gekennzeichnet, daß die lineare Geschwindigkeit der Luft, gemessen bei den am Ausgang der Wirbelschichtzone vorliegenden Bedingungen, 0,5 m/sec nicht überschreitet.

6. Verfahren nach einem der Ansprüche 4 und 5, dadurch gekennzeichnet, daß die Isolierung der ausgetragenen Körner aus der sie umgebenden Luft durch Zyklonieren erfolgt.

## Claims

1. Process for continuous production of sodium perborate monohydrate by dehydration of sodium perborate tetrahydrate in only one step in a bed fluidized by means of a current of hot air, characterized in that the temperature of the air is between 100°C and 180°C when it enters the fluidization zone and that, in the said zone, the temperature is between 65°C and 80°C and the relative humidity is below 40% and at least 10%.

2. Process according to claim 1, characterized in that the air temperature is between 130°C and 175°C.

3. Process according to one of claims 1 or 2, characterized in that the relative humidity is between 15% and 30%.

4. Process according to one of claims 1 to 3, characterized in that the particles entrained in the air outside the fluidization zone, so long as their quantity is equal at most to 10% weight by weight of the sodium perborate monohydrate formed, are used directly as a constituent of the product without any operation other than their preliminary isolation.

5. Process according to claim 4, characterised in that the linear velocity of the air, measured in the conditions ruling at the exit from the fluidization zone, does not exceed 0.5 m/s.

6. Process according to one of claims 4 or 5, characterized in that the isolation of the entrained particles is achieved by cycloning the air containing them.